# EUROPEAN PATENT APPLICATION

(11) **EP 4 304 037 A1**
(43) Date of publication of application: **10.01.2024**
(21) Application number: 22382648.8
(22) Date of filing: 06.07.2022
(51) Int. Cl.: H02J 3/00, G06Q 50/06

(54) **METHOD FOR ESTABLISHING THE TRACEABILITY OF THE ENERGY PRODUCED BY A POWER GENERATION FACILITY**

(71) Applicant: Enviroscale S.L., 30500 Molina de Segura (Murcia) (ES)
(72) Inventor: MORALES TORRES, RAÚL, 30507 LA ALCAYNA (ES)
(74) Representative: Isern Patentes y Marcas S.L.

(57) **Abstract**

The present invention relates to a method for establishing the traceability of the energy produced by a power generation facility, preferably on an hourly or quarter-hourly basis, and more specifically to a method implemented by a computing system which allows rating the produced energy based on ESG (environmental, social, and corporate governance) indicators, by associating said sustainability rating (ESG) with a Guarantee of Origin certificate (GdO) corresponding to each unit of energy generated in a power generation facility, allowing the decommoditization of energy, and the storage of said sustainability rating in a blockchain which ensures its immutability and traceability to allow tracking same.

## Description

### Technical field of the invention

The present invention relates to a method for establishing the traceability of the energy produced by a power generation facility, preferably on an hourly or quarter-hourly basis, and more specifically to a method implemented by a computing system which allows rating the produced energy based on ESG (environmental, social, and corporate governance) indicators, by associating said sustainability rating (ESG) with a Guarantee of Origin certificate (GdO) corresponding to each unit of energy generated in a power generation facility, allowing the decommoditization of energy, and the storage of said sustainability rating in a blockchain which ensures its immutability and traceability to allow tracking same.

### Background of the invention

When energy is generated, fed into the grid, and consumed by users, it is not possible to know its origin physically nor can it be distinguished from the energy reaching each supply point. The output of all energy sources is fed into the same grid, and there is currently no system capable of determining whether or not the electrons have a sustainable origin.

Renewable energy can be identified, but not the sustainability (environmental, social, and corporate governance) of the energy. The generation plants from which the energy, which is being consumed at homes, originates cannot be known today either. In turn, when starting the development of a plant, producers are unaware of the degree to which the plant is aligned with environmental, social, and corporate governance factors.

Currently, there are no standards which certify, assess, and measure the degree of sustainability of the energy which is being generated. There are some systems today which identify the renewable origin of the energy, such as Guarantee of Origin Certificates (or GdO) in the case of Spain, or Energy Attribute Certificates (EAC) in other countries. Generally, the mechanism which is used to guarantee the origin of the energy is the issuance of the Guarantee of Origin certificates. In the case of Spain, the Guarantee of Origin certificates are issued by the National Markets and Competition Commission (*Comisión Nacional del Mercado de la Competencia* - CNMC).

However, the current mechanism is limited to determining the renewable origin of the energy, but not the sustainability thereof, and therefore does not provide a response to the measurement of energy sustainability.

To that end, it is apparent that there is a demand for a method which allows establishing the traceability of the energy produced in a power generation facility which takes into consideration both the renewable origin of the energy and its sustainable origin (taking into account the degree of alignment with environmental, social, and corporate governance factors), overcoming the problems of the state of the art.

### Description of the invention

The present invention proposes a solution to the preceding problems by means of a method implemented by a computing system for establishing the traceability of the energy produced per time intervals, providing a scoring to each generated unit of energy, based on a sustainability measuring system leveraging environmental, social, and corporate governance indicators, as described below.

In an inventive aspect, the invention provides a *method implemented by a computing system for establishing the traceability of the energy produced by a power generation facility,*
*wherein the power generation facility comprises energy generating means and energy measuring means configured for measuring the amount of power generated by the facility within a time interval,*
*wherein the generated energy is associated with an ESG sustainability rating linked to a certification of the power generation facility associated with the fulfillment of environmental, social, and corporate governance commitment indicators, and*
*wherein the computing system is in communication with the energy measuring means and with a computer network comprising a blockchain;*
*wherein the method comprises, by the computing system, for each unit of energy generated during a time interval, the steps of:*
*receiving a Guarantee of Origin certificate, GdO, for the generated unit of energy, associating the sustainability rating with the Guarantee of Origin certificate,*
*adding the sustainability rating associated with the Guarantee of Origin certificate to the blockchain of the computer network.*

Throughout the present document, it will be understood that the computing system can be both a conventional computer and an industrial computer or another type of electronic logic device with connection to a data communication network such as, the Internet, for example; in one example, the computing system can be a system with one or more computers interconnected with one another, preferably by means of a data communication network; in another example, the computing system is an industrial computer integrated in the power generation facility. The computing system is configured for executing a computer program which, as the result of the execution thereof, reproduces the method object of the invention; the computing system receives data from at least the energy measuring means, as well as from a data communication network. Furthermore, the computing system preferably comprises data storage means, data transmission means, data input means, and information display means.

Power generation facility should be understood to mean any system or combination of physical systems intended for electric energy generation, transformation, and/or distribution such as, for example, thermoelectric stations, hydroelectric stations, wind power stations, or photovoltaic plants. It must be understood that the power generation facility is operatively connected to an electric energy distribution network, for example through one or more stations or substations; the power generation facility is thereby integrated in a larger electrical system with the corresponding wholesale energy market (pool market) in which the generated energy is marketed; advantageously, the participants of this market have access to the traceability of each generated unit of energy. Traceability should be understood as the possibility of identifying the origin and the different stages of the energy production and distribution process.

Preferably, there is stored in the computing system an ESG certification of the power generation facility, which is implemented as a data file containing a scale, for example, a numerical value between 0 and 1000, wherein the value has been previously established based on the fulfillment of environmental, social, and corporate governance, ESG, commitment indicators by the power generation facility; in other embodiments, the computing system receives the ESG certification through a data communication network. Also preferably, the ESG certification is calculated from the values of one or more key performance indicators (KPIs), the fulfillment of which by the facility is endorsed by a verifying entity or trusted by all the participants of the energy market, particularly by a certification entity which allows guaranteeing that the KPIs are suitably measured.

This ESG certification is preferably a yearly certification by an independent third party and also preferably linked to the environmental impact of the construction and operation of the power generation facility, as well as to social and ethical criteria; the ESG certification of the power generation facility may vary over time, depending on possible changes in the operating conditions of the facility or on long-lasting modifications therein. For this reason, the fulfillment of sustainability indicators KPI must preferably be reviewed every year by the verifying entity to verify whether modifications which substantially change the energy generation conditions have occurred.

A sustainability rating or scoring of each unit of energy produced in the facility is obtained with the ESG certification of the facility. Preferably, the sustainability rating is implemented as a data file containing a scalar value proportional to the ESG certification of the power generation facility; in a preferred example, the sustainability rating is a numerical value between 0 and 10, wherein the value 0 is assigned to units of energy generated in the facilities with an ESG certification equal to or less than 500, and the value 10 is assigned to units of energy generated in the facilities with a maximum ESG certification.

To establish energy traceability, each generated unit of energy receives a Guarantee of Origin certificate, GdO, which is issued by an authorized entity, for example CNMC, and which allows guaranteeing that a given generation facility has produced, in a given moment, a unit of energy under certain conditions such as, for example, production without the use of fossil fuels or production with fully renewable means. In a preferred example, the Guarantee of Origin certificate is a Guarantee of Origin certificate issued by the Spanish CNMC and received by the computing system by means of a connection to a server of the CNMC through a data communication network. Once the Guarantee of Origin certificate is obtained, the computing system associates the sustainability rating of the unit of energy with the corresponding Guarantee of Origin certificate, for example, by adding a unique identifier of the Guarantee of Origin certificate to the sustainability rating, and lastly, the computing system adds the sustainability rating to a blockchain implemented in a computer network in operative communication with the computing system.

It will also be understood that the computer network is a set of computers interconnected with one another, preferably by means of a data communication network such as the

Internet, for example, wherein each node of the computer network is configured for storing a copy or part of a copy of the blockchain. The blockchain is configured for recording, in a tamper-proof manner, a series of transactions which in the present invention correspond to the generation of units of energy. In one embodiment, the computing system is a node of the computer network on which the blockchain is implemented; in another embodiment, the computing system is in data communication with the computer network through the Internet.

Advantageously, the present invention allows the decommoditization of energy and the establishment of the traceability thereof in order to know the origin of the energy and from which generation plants it originates.

In a particular embodiment, *the ESG certification is obtained based on a weighted sum of key performance indicators, KPIs.* In one embodiment, the certification is calculated by means of the computing system based on data received by any of the data input means, or based on data previously stored in the computing system. Advantageously, the ESG certification based on key performance indicators allows establishing a single objective criterion for any power generation facility.

In a particular embodiment, *the key performance indicators are related with one or more of the following factors: content of fluorinated elements in solar panels, percentage of recycled steel used in construction, percentage of recycled aluminum used in construction, CO₂ emissions generated by material transport, consumption of water used for cleaning solar panels, percentage of the surface of the power generation facility which has been reforested, percentage of energy originating from renewable sources consumed in the power generation facility, percentage of recovered waste.*

Advantageously, the preceding indicators allow establishing the degree of fulfillment of environmental sustainability by the power generation facility based on readily measurable and computable criteria.

In a particular embodiment, *the time interval is one hour.* With the current mechanism, the certificates issued are monthly certificates, with a one-year validity. However, when companies consume that energy backed by renewable certificates, they do so at times where there is no renewable energy generation, so it will not actually be 100% renewable. In addition to determining energy sustainability by means of the fulfillment of ESG criteria, the present invention has an hourly granularity, which will allow companies to adapt their consumption to the times where energy is indeed 100% renewable. Advantageously, establishing the traceability in one-hour intervals allows achieving significant granularity. In another particular embodiment, *the time interval is fifteen minutes.* Advantageously, establishing energy traceability in quarter-hour intervals allows achieving even better granularity.

In a particular embodiment, *the power generation facility is a photovoltaic plant.* Renewable energy generation facilities are those most likely to perceive the greatest benefits from establishing the traceability of the generated energy in a transparent and verifiable manner due to the greater demand of this mode of generation.

In a second inventive aspect, the invention provides a computing system configured for executing the method according to the first inventive aspect.

These and other features and advantages of the invention will be evident in light of the description of preferred, but not exclusive, embodiments which are illustrated by way of non-limiting example in the drawings which are attached.

### Brief description of the drawings

- Figure 1: This figure shows a flow chart corresponding to a preferred embodiment of the method of the present invention.
- Figure 2: This figure shows a preferred embodiment of the computing system of the present invention in connection with other elements.

### Detailed description of an exemplary embodiment

In the following detailed description, numerous specific details are set forth in the form of examples to provide a thorough understanding of the relevant teachings. However, it will be apparent to those skilled in the art that the present teachings can be implemented without such details.

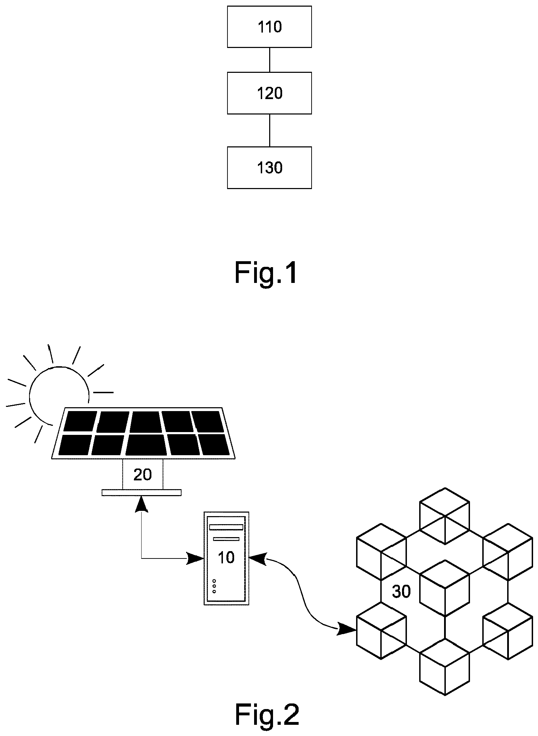

Figure 1 shows a preferred exemplary embodiment of the method of the present invention; in this example, the power generation facility (20) is a photovoltaic plant with an energy meter installed at the outlet of the inverters and connected with the computing system (10) which, in the example, is a conventional computer with Internet connection; the power generation facility (20) has an ESG certification calculated based on a weighted sum of key performance indicators, KPIs, including factors such as the content of fluorinated elements in solar panels, the percentage of recycled steel used in construction, and the CO₂ emissions generated by material transport; in this example, the ESG certification of the power generation facility (20) is an integer between 0 and 1000 and is stored in a nonvolatile memory of the computing system (10).

In a specific case, in order to establish the traceability of the energy generated during a time interval which, in the example, is a period of fifteen minutes, for each unit of energy equal to a megawatt-hour, MWh, the computing system (10) receives signals from the energy meter indicating the units of energy generated during the period of fifteen minutes, and requests and receives (110) from a server of the CNMC, through the Internet, a Guarantee of Origin certificate, GdO, for each unit of energy generated in said period, which are temporarily stored in the memory of the computing system (10). Next, the computing system (10) associates (120) the Guarantee of Origin certificate with a sustainability rating. In this example, the sustainability rating is an individualized file for each unit of energy containing an integer between 0 and 10, wherein the value 0 corresponds to an ESG certification equal to or less than 50, and the value 10 corresponds to a maximum ESG certification with a value of 1000. In the example, the step of associating (120) comprises adding to the file containing the sustainability rating the identifier of the Guarantee of Origin certificate for the unit of energy.

Lastly, the computing system (10) transmits the sustainability rating associated with the Guarantee of Origin certificate through the Internet to a computer network on which a specific blockchain (30) for recording the traceability of the energy is implemented, such that the sustainability rating associated with the Guarantee of Origin certificate of the unit of energy is added (130) to the blockchain (30), thereby being recorded in a verifiable manner and without any possibility of modification.

Figure 2 schematically shows the power generation facility (20) of the example operatively connected with the computing system (10) which is in turn operatively connected with a computer network comprising the blockchain (30) in which information which allows establishing the traceability of each generated unit of energy is recorded.

## Claims

1. A method implemented by a computing system (10) for establishing the traceability of the energy produced by a power generation facility (20),
wherein the power generation (20) facility comprises energy generating means and energy measuring means configured for measuring the amount of power generated by the facility within a time interval,
wherein the generated energy is associated with a sustainability rating linked to an ESG certification of the power generation facility (20) associated with the fulfillment of environmental, social, and corporate governance commitment indicators, and wherein the computing system (10) is in communication with the energy measuring means and with a computer network comprising a blockchain (30);
wherein the method comprises, by the computing system (10), for each unit of energy generated during a time interval, the steps of:
receiving (110) a Guarantee of Origin certificate, GdO, for the generated unit of energy,
associating (120) the sustainability rating with the Guarantee of Origin certificate, adding (130) the sustainability rating associated with the Guarantee of Origin certificate to the blockchain (30) of the computer network.

2. The method according to the preceding claim, wherein the ESG certification is obtained based on a weighted sum of key performance indicators, KPIs.

3. The method according to the preceding claim, wherein the key performance indicators are related with one or more of the following factors: content of fluorinated elements in solar panels, percentage of recycled steel used in construction, percentage of recycled aluminum used in construction, CO₂ emissions generated by material transport, consumption of water used for cleaning solar panels, percentage of the surface of the power generation facility which has been reforested, percentage of energy originating from renewable sources consumed in the power generation facility, percentage of recovered waste.

4. The method according to any of the preceding claims, wherein the time interval is one hour.

5. The method according to any of the preceding claims, wherein the time interval are fifteen minutes.

6. The method according to any of the preceding claims, wherein the power generation facility (20) is a photovoltaic plant.

7. A computing system (10) configured for executing the method according to any of the preceding claims.
